# EUROPEAN PATENT APPLICATION

(11) **EP 4 700 380 A1**
(43) Date of publication of application: **25.02.2026**
(21) Application number: 23933647.2
(22) Date of filing: 24.07.2023
(51) Int. Cl.: G01N 27/00

(54) **LIQUID FRICTION CHEMICAL COMPONENT ANALYZER AND ANALYSIS METHOD**

(30) Priority: 17.04.2023 CN 202310408963
(71) Applicant: Beijing Institute of Nanoenergy And Systems, Beijing 101499 (CN)
(72) Inventor: LIN, Shiquan, Beijing 101499 (CN); ZHANG, Jinyang, Beijing 101499 (CN); WANG, Zhonglin, Beijing 101499 (CN)
(74) Representative: Gruner, Leopold Joachim
(86) International application number: PCT/CN2023/108850
(87) International publication number: WO 2024/216774

(57) **Abstract**

A chemical composition analysis spectrometer based on liquid friction and analysis method thereof, the spectrometer includes a plurality of electrodes arranged in an array, at least one layer of insulating film disposed over the plurality of electrodes, a current collection module, and a data processing module. The current collection module is configured to collect ground current data generated by each of the electrodes. The data processing module is configured to: (a) derive the triboelectric charge amount of the liquid droplet, and thereby generate a position-charge quantity response curve; (b) calculate multiple corresponding spectrum matching degrees; and (c) identify a solution sample exhibiting a highest spectrum matching degree, and output chemical composition, ion species, chemical valence state, and concentration information of the liquid droplet. The spectrometer offers the advantages of a simple structure, low usage costs, portability and ease of maintenance.

## Description

### FIELD OF THE INVENTION

The present invention relates to technical field of chemical technology, and more particularly to a chemical composition analysis spectrometer based on liquid friction and analysis method thereof.

### BACKGROUND OF THE INVENTION

Current chemical composition analysis technologies include an inductive coupled plasma emission spectrometer (ICP), an X-ray photoelectron spectrometer (XPS), and ion chromatography (IC). Among these, ICP utilizes the fact that different elements release different amounts of energy during electron transitions, thereby producing their inherent characteristic spectral lines. Simultaneously, the intensity of the spectral lines is related to the atomic density, and by measuring the intensity of the characteristic spectral lines and comparing them with a series of standard solutions of known concentrations, the content of each element in the sample solution can be determined. IC is a liquid chromatography technique that separates and detects substances based on their ionic properties. XPS irradiates the sample surface with X-rays of a certain energy, causing electrons in the sample atoms to be ejected as free electrons, and an energy analyzer is used to measure the energy of the photoelectrons, ultimately obtaining the composition of the sample. Among the three chemical composition analysis technologies mentioned above, ICP and IC are suitable for liquid-phase samples, while XPS is suitable for solid-phase samples. The drawbacks of these three chemical composition analysis technologies are their high equipment costs, difficult maintenance, and lack of portability.

### SUMMARY OF THE INVENTION

In view of the foregoing, and to address the technical deficiencies in the prior art including high equipment costs, difficult maintenance, and lack of portability in conventional chemical composition analysis methods, the present invention provides a chemical composition analysis spectrometer based on liquid friction and analysis method thereof.

The present invention provides a filming chemical composition analysis spectrometer based on liquid friction, the spectrometer includes a plurality of electrodes arranged in an array, at least one layer of insulating film disposed over the plurality of electrodes, a current collection module, and a data processing module. Wherein, sliding of a liquid droplet on an upper surface of the insulating film along an arrangement direction causes triboelectric charge transfer at a liquid-solid interface. The current collection module is configured to collect ground current data generated by each of the electrodes. The data processing module is configured to: (a) derive a triboelectric charge amount of the liquid droplet at different positions on the insulating film along the arrangement direction from the arrangement positions of the electrodes and their corresponding ground current data, and thereby generate a position-charge quantity response curve as a measured triboelectric chemical spectrum of the liquid droplet; (b) compare the measured triboelectric chemical spectrum with the standard triboelectric chemical spectra of multiple solution samples stored in a non-transitory storage medium, and calculate multiple corresponding spectrum matching degrees; wherein the multiple solution samples have different chemical compositions, chemical valence states, and/or concentrations; and (c) identify a solution sample exhibiting a highest spectrum matching degree to the measured triboelectric chemical spectrum, and output chemical composition, ion species, chemical valence state, and concentration information of the liquid droplet based on chemical information of the identified solution sample.

In the spectrometer of the present invention, each of the electrodes includes a material selected from the group consisting of copper film, aluminum film, and gold film.

In the spectrometer of the present invention, the plurality of electrodes is arranged in a linear array configuration, wherein the orientation of the linear array is inclined relative to a horizontal plane.

In the spectrometer of the present invention, each of the electrodes is characterized by a thickness in a range of 0.1 µm to 1 mm, a length in a range of 1 mm to 100 cm, and a width in a range of 1 mm to 10 cm. The width direction of the electrodes is parallel to the direction of the linear array. The plurality of electrodes is arranged in a parallel and equally spaced configuration with a spacing in a range of 1 mm to 100 cm.

In the spectrometer of the present invention, each of the electrodes has a cross-sectional shape perpendicular to the direction of the linear array, wherein the cross-sectional shape is one of a rectangle, a "V" shape, a "U" shape, and a circular ring.

In the spectrometer of the present invention, the plurality of electrodes is arranged in a circumferential array configuration and fixed to a roller. The insulating film is disposed on an inner wall of the roller and in contact with the plurality of electrodes. The spectrometer further includes a driving member configured to drive the roller to rotate about its central axis.

In the spectrometer of the present invention, the insulating film is formed from one of polytetrafluoroethylene, perfluoroethylene propylene copolymer, nylon, and polymethyl methacrylate, and has a thickness in a range of 1 µm to 1 mm.

The present invention also provides a chemical composition analysis method based on liquid friction adapted for implementation by. The analysis method includes: causing a liquid droplet to slide on the insulating film; collecting ground current data from each electrode; deriving the triboelectric charge amount of the liquid droplet at different positions on the insulating film along the arrangement direction from the arrangement positions of the electrodes and their corresponding ground current data; generating a position-charge quantity response curve as a measured triboelectric chemical spectrum of the liquid droplet; comparing the measured triboelectric chemical spectrum with the standard triboelectric chemical spectra of multiple solution samples in a database; calculating multiple corresponding spectrum matching degrees; wherein the multiple solution samples have different chemical compositions, chemical valence states, and/or concentrations; identifying a solution sample exhibiting a highest spectrum matching degree to the measured triboelectric chemical spectrum; and outputting chemical composition, ion species, chemical valence state, and concentration information of the liquid droplet based on the chemical information of the solution sample.

In the analysis method of the present invention, the database is preconstructed by a method including: preparing a plurality of solution samples with specific chemical information according to analysis requirements, wherein the plurality of solution samples have different chemical compositions, chemical valence states, and/or concentrations; conducting multiple liquid droplets triboelectric charging tests on each of the solution samples in accordance; obtaining multiple sets of triboelectric chemical spectra for each solution sample, generating the multiple sets of triboelectric chemical spectra into a standard triboelectric chemical spectrum for each solution sample; constructing the database based on the specific chemical information and the standard triboelectric chemical spectra of the plurality of solution samples.

In the analysis method of the present invention, the comparison items include the position, peak height, and peak width of characteristic peaks.

Compared to the prior art, the technical solution disclosed herein provides the following advantages.

The spectrometer of the present invention is primarily used for the composition analysis of liquid samples, including elements, chemical valence states, and concentrations present in the liquid samples. The present invention utilizes a plurality of metal electrodes disposed beneath an insulating film; wherein different liquid droplets generate varying amounts of triboelectric charge at different positions as they slide over the solid film. The triboelectric charge at different positions is measured through the electrostatic induction effect between the metal electrodes and the surface triboelectric charges, thereby achieving a method for analyzing the chemical composition of liquid droplets using low-cost metal electrodes and an electrometer. Due to its simple structure and ease of fabrication, in addition to cost savings, the chemical composition analysis spectrometer also offers the advantages of low usage costs, portability and ease of maintenance.

The analysis method applied to said spectrometer inherently possesses commensurate advantages, the elaboration of which is omitted herein for conciseness.

### BRIEF DESCRIPTION OF THE DRAWINGS

The above objects and advantages of the present invention will become more readily apparent to those ordinarily skilled in the art after reviewing the following detailed description and accompanying drawings, in which:
FIG. 1 is a schematic diagram illustrating the principle of the chemical composition analysis spectrometer in the first embodiment of the present invention.
FIG. 2 is a partial cross-sectional view showing the insulator film and array electrodes fixed on the substrate in the first embodiment of the present invention.
FIG. 3 is a schematic diagram of the structure of a linear electrode array with a rectangular cross-section in the first embodiment of the present invention.
FIG. 4 is a schematic diagram of the structure of a linear electrode array with a "V"-shaped cross-section in the first embodiment of the present invention.
FIG. 5 is a schematic diagram of the structure of a linear electrode array with a semi-circular (U-shaped) cross-section in the first embodiment of the present invention.
FIG. 6 is a schematic diagram of the structure of a linear electrode array with a circular cross-section in the first embodiment of the present invention.
FIG. 7 is a schematic diagram of the circumferential electrode array on a roller in the first embodiment of the present invention.
FIG. 8 is a chemical composition analysis spectrum of different solutions provided in the first embodiment of the present invention.
FIG. 9 is a flowchart of the chemical composition analysis method in the second embodiment of the present invention.

### DETAILED DESCRIPTION OF PREFERRED EMBODIMENTS

The technical solutions in the embodiments of the present invention will be described clearly and completely below in conjunction with the accompanying drawings. It is apparent that the described embodiments represent only a subset of possible implementations of the invention, not an exhaustive enumeration. All other embodiments obtainable by persons of ordinary skill in the art based on the disclosed embodiments without creative effort shall fall within the scope of protection of the present invention.

For positional relationships: (1) "mounted to" means direct attachment to another component or attachment through intervening components; (2) "disposed on" includes direct placement on another component or placement with intermediate components present; (3) "fixed to" encompasses direct securing to another component or securing with intermediary components existing.

Unless otherwise defined: all technical/scientific terms herein carry meanings commonly understood by practitioners in the relevant technical field; terminology usage serves solely to describe specific embodiments without limiting the invention; the expression "and/or" includes any and all combinations of one or more associated listed items.

### First embodiment

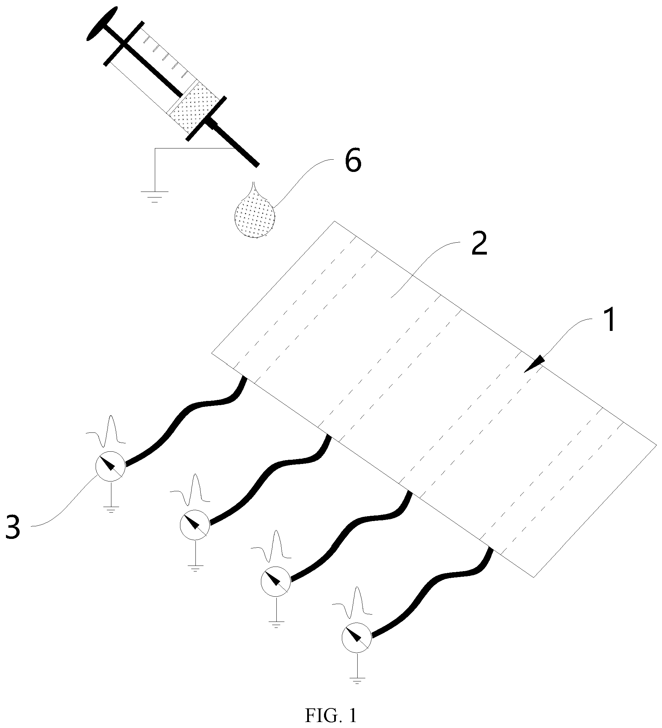

Referring to FIGS. 1, a chemical composition analysis spectrometer based on liquid friction is shown as an embodiment. The analysis spectrometer includes a plurality of electrodes 1, at least one layer of insulating film 2, a current collection module 3, and a data processing module (image not shown).

The plurality of electrodes 1 is arranged in an array. The insulating film 2 is disposed over the plurality of electrodes 1.

In the present embodiment, each of the electrodes 1 can be made of any conductive material, such as a material selected from the group consisting of copper film, aluminum film, gold film, etc. Each of the electrodes 1 is characterized by a thickness in a range of 0.1 µm to 1 mm, a length in a range of 1 mm to 100 cm, and a width in a range of 1 mm to 10 cm. All electrodes 1 is arranged in a linear array configuration, with a spacing ranging from 1 mm to 100 cm.

The insulating film 2 can be made of any solid insulating material, such as polytetrafluoroethylene, perfluoroethylene propylene copolymer, nylon, and polymethyl methacrylate, and the insulating film may have a thickness in a range of 1 µm to 1 mm.

In this configuration, when a liquid droplet 6 to be tested slides on an upper surface of the insulating film 2 along the arrangement direction of the plurality of electrodes 1, the liquid droplet 6 sequentially generates triboelectric charging with the surface of the insulating film 2 on each of the electrodes 1, thereby inducing a corresponding ground current in each of the electrodes 1.

The current collection module 3 is configured to collect ground current data generated by each of the electrodes 1. In the present embodiment, the current from the plurality of electrodes 1 may be measured using an electrometer. Additionally, the volume of the liquid droplet 6 to be tested may range from 0.1 microliters to 1 milliliter.

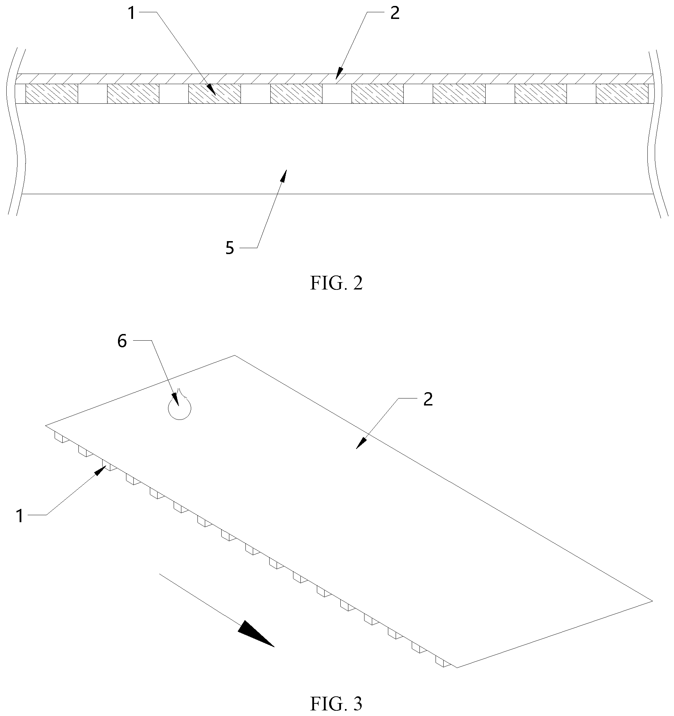

Referring to FIGS. 2, in the present embodiment, the plurality of electrodes 1 is arranged in a linear array configuration. This enables an unlimited number of electrodes 1 to be arranged along the direction of the linear array according to requirements. Furthermore, the plurality of electrodes 1 may be fixed onto a supporting substrate 5. The shape of the substrate 5 and the insulating film 2 can be adaptively configured according to the shape of the electrodes 1.

Referring to FIGS. 3, the plurality of electrodes 1 is arranged in a linear array configuration, in which the orientation of the linear array is inclined relative to a horizontal plane. The tilt angle is an acute angle, which ensures that the liquid droplet 6 to be tested can roll off smoothly. The straight arrow at the bottom of the figure indicates the direction of the linear array. The cross-sectional shape of the electrodes 1 perpendicular to the direction of the linear array is rectangular, meaning that the substrate 5 as a whole may form an inclined rectangular plate, and the insulating film 2 covering the plurality of electrodes 1 may also conform to the shape of the substrate 5. In this way, the liquid droplet 6 can slide along the direction of the linear array of electrodes 1 on the inclined surface, moving from the highest point to the lowest point of the insulating film 2.

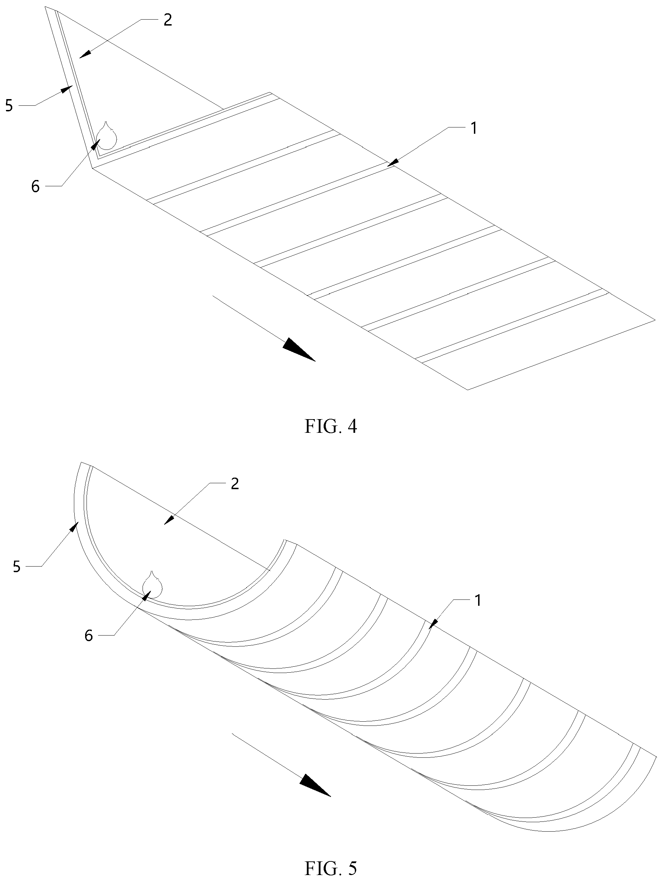

Referring to FIGS. 4, 5 and 6, Each of the electrodes 1 has a cross-sectional shape perpendicular to the direction of the linear array, in which the cross-sectional shape is one of a rectangle, a "V" shape, a "U" shape, and a circular ring. In this manner, the substrate 5 and the insulating film 2 are configured to form a groove structure extending along the direction of the linear array, thereby enabling the liquid droplet 6 to slide more stably along the linear direction.

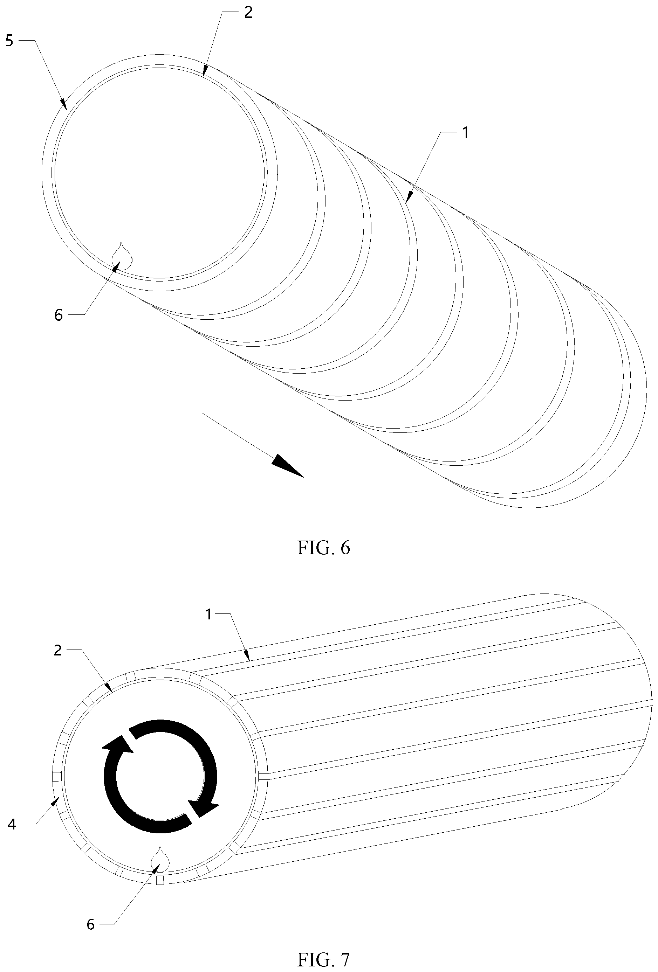

Furthermore, in the present embodiment, another arrangement mode for the plurality of electrodes 1 is provided: circumferential array distribution. Referring to FIGS. 7, the plurality of electrodes 1 is arranged in a circumferential array configuration and fixed to a roller 4. The insulating film 2 is disposed on an inner wall of the roller 4 and in contact with the plurality of electrodes 1. The driving member is configured to drive the roller 4 to rotate about its central axis.

In this embodiment, each of the electrodes 1 comprises a material selected from the group consisting of copper film, aluminum film, and gold film. An alternative arrangement of the plurality of electrodes 1 is also provided: a circumferential array distribution. Specifically, these electrodes 1 can be fixed to the circumferential side wall of the roller 4. For example, embedded in the roller 4, which the roller 4 is considered as the substrate 5 providing support.

Each electrode 1 is in the form of a straight strip parallel to the axis of the roller 4, and the inner side of the electrodes 1 along the radial direction of the roller 4 constitutes part of the inner wall of the roller 4. The insulating film 2 precisely covers the entire inner wall of the roller 4 and is in contact with the inner sides of the plurality of electrodes 1. In this way, an analysis spectrometer with the same principle as the aforementioned linear electrode 1 array but with a different structure and operating mode can be formed.

The end of the roller 4 can be coaxially fixed to the output shaft of a drive motor, thereby enabling the roller 4 to rotate about its own axis, with the circular double arrows in the figure indicating the direction of rotation of the roller 4. When the roller 4, carrying the electrodes 1 and the insulating film 2, rotates directionally, liquid droplets 6, due to gravity, remain on the insulating film 2 at the bottom wall of the roller 4. Thus, the entire device functions similarly to a treadmill or running wheel, with the liquid droplets 6 effectively running in place inside, allowing them to sequentially pass over each circumferentially distributed electrode 1 as the roller 4 rotates under external force, causing each electrode 1 to sequentially generate a current to ground.

It should be noted that the axis of the roller 4 in this setup is parallel to the horizontal plane, eliminating the need for tilting as in the aforementioned linear array, thereby potentially saving space in the analytical spectrometer. In some embodiments, multiple rollers 4 can be fixed in series, requiring only one drive motor to simultaneously rotate multiple rollers 4, allowing for simultaneous measurements of different droplets 6, effectively improving the efficiency of analytical work.

In the present embodiment, the triboelectric characteristics between the liquid droplet 6 and the solid surface are utilized. When the liquid droplet 6 slides on the solid surface, the distribution of triboelectric charges along the sliding path is not uniform but follows a certain pattern. Different liquids exhibit different patterns of triboelectric charge distribution along the sliding path on the same solid surface. For example, some liquid droplets 6 generate a higher amount of triboelectric charge at the beginning of the sliding path and a lower amount at the end, while others generate a lower amount at the beginning and a higher amount at the end.

Based on this phenomenon, the present embodiment places metal electrodes 1 beneath the surface of the solid insulating film 2 and uses an electrometer to measure the ground current of each electrode. Wherein, sliding of a liquid droplet 6 on an upper surface of the insulating film 2 along an arrangement direction causes triboelectric charge transfer at a liquid-solid interface. By measuring the ground current of the metal electrodes 1 using the electrometer, the distribution of triboelectric charges on the solid surface can be obtained.

The data processing module is configured to implement three functions (a), (b), and (c), as described below.

Function (a): deriving a triboelectric charge amount of the liquid droplet 6 at different positions on the insulating film 2 along the arrangement direction from the arrangement positions of the electrodes 1 and their corresponding ground current data, and thereby generate a position-charge quantity response curve as a measured triboelectric chemical spectrum of the liquid droplet 6.

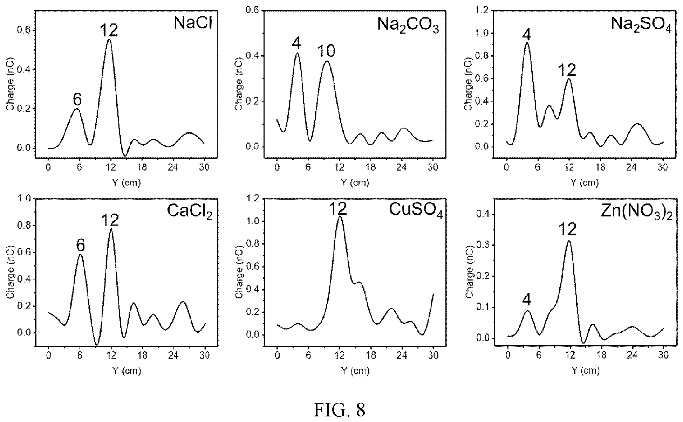

Referring to FIG. 8, triboelectric chemical composition spectra of various solutions obtained by the chemical composition analysis spectrometer, including NaCl solution, Na₂CO₃ solution, Na₂SO₄ solution, CaCl₂ solution, CuSO₄ solution, and Zn(NO₃)₂ solution. It is demonstrated that different ions exhibit unique characteristic peaks, thereby enabling the differentiation of different solutions. In the triboelectric chemical spectrum, the horizontal axis corresponds to the moving distance of the liquid droplet 6 along the distribution direction of the plurality of electrodes 1 on the insulating film 2, and the vertical axis corresponds to the triboelectric charge amount of the liquid at different positions on the solid surface.

Function (b): comparing the measured triboelectric chemical spectrum with the standard triboelectric chemical spectra of multiple solution samples stored in a non-transitory storage medium, and calculate multiple corresponding spectrum matching degrees. In this function, the multiple solution samples have different chemical compositions, chemical valence states, and/or concentrations.

Specifically, the two solution samples differ in at least one of the following aspects of chemical information: chemical composition, chemical valence state, and concentration. The greater the variety and quantity of solution samples, the richer the constructed database, and the more accurate the results of spectrum matching degree calculations. For example, assuming that other chemical information and analysis conditions remain the same, within a certain concentration range, the database can be enriched by increasing the density of concentration sample data. For instance, a NaCl solution with a concentration range of 10% to 50% may have approximately 40 sample sets, which can be increased to 400 sample sets.

Function (c): identifying a solution sample exhibiting a highest spectrum matching degree to the measured triboelectric chemical spectrum, and outputting chemical composition, ion species, chemical valence state, and concentration information of the liquid droplet 6 based on the chemical information of the solution sample.

The comparison items include the position, peak height, and peak width of characteristic peaks. In some embodiments, different weights may be assigned to the comparison items of characteristic peak position, peak height, and peak width based on extensive experiments and empirical values, and the spectrum matching degrees may be obtained through weighted fusion.

As described above, the spectrometer is primarily used for the composition analysis of liquid samples, including elements, chemical valence states, and concentrations present in the liquid samples. The present embodiment utilizes a plurality of metal electrodes 1 disposed beneath an insulating film 2, in which different liquid droplets 6 generate varying amounts of triboelectric charge at different positions as they slide over the solid film. The triboelectric charge at different positions is measured through the electrostatic induction effect between the metal electrodes 1 and the surface triboelectric charges, thereby achieving a method for analyzing the chemical composition of liquid droplets 6 using low-cost metal electrodes 1 and an electrometer. Due to its simple structure and ease of fabrication, in addition to cost savings, the triboelectric chemical composition analysis spectrometer also offers the advantages of low usage costs, portability and ease of maintenance.

### Second embodiment

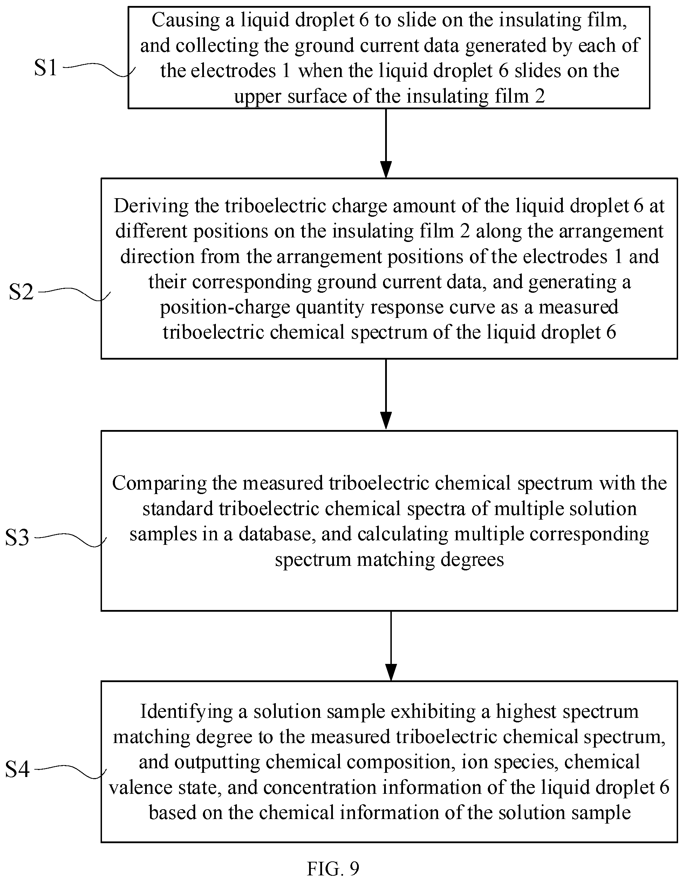

Referring to FIG. 9, a chemical composition analysis method based on liquid friction is shown as an embodiment. The analysis method is applied to the spectrometer according to the any of the first to fourth embodiments. The analysis method includes the following steps.

Step S1: causing a liquid droplet 6 to slide on the insulating film, and collecting the ground current data generated by each of the electrodes 1 when the liquid droplet 6 slides on the upper surface of the insulating film 2.

Step S2: deriving the triboelectric charge amount of the liquid droplet 6 at different positions on the insulating film 2 along the arrangement direction from the arrangement positions of the electrodes 1 and their corresponding ground current data, and generating a position-charge quantity response curve as a measured triboelectric chemical spectrum of the liquid droplet 6.

Step S3: comparing the measured triboelectric chemical spectrum with the standard triboelectric chemical spectra of multiple solution samples in a database, and calculating multiple corresponding spectrum matching degrees; wherein the multiple solution samples have different chemical compositions, chemical valence states, and/or concentrations.

Step S4: identifying a solution sample exhibiting a highest spectrum matching degree to the measured triboelectric chemical spectrum, and outputting chemical composition, ion species, chemical valence state, and concentration information of the liquid droplet 6 based on the chemical information of the solution sample.

The analysis method incorporates additional steps based on the procedures outlined in the fifth embodiment. The database is preconstructed by a construction method. The construction method includes step (1) and step (2).

Step (1): preparing a plurality of solution samples with specific chemical information according to analysis requirements, in which the plurality of solution samples have different chemical compositions, chemical valence states, and/or concentrations.

Step (2): conducting multiple liquid droplets 6 triboelectric charging tests on each of the solution samples in accordance with the method described in steps S1 to S2, obtaining multiple sets of triboelectric chemical spectra for each solution sample, fitting the multiple sets of triboelectric chemical spectra into a standard triboelectric chemical spectrum for each solution sample, and constructing the database based on the specific chemical information and the standard triboelectric chemical spectra of the plurality of solution samples.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A chemical composition analysis spectrometer based on liquid friction, **characterized in that**: the spectrometer comprises:
a plurality of electrodes arranged in an array;
at least one layer of insulating film disposed over the plurality of electrodes, wherein sliding of a liquid droplet on an upper surface of the insulating film along an arrangement direction causes triboelectric charge transfer at a liquid-solid interface, thereby inducing a corresponding ground current in each of the electrodes;
a current collection module configured to collect ground current data generated by each of the electrodes; and
a data processing module configured to:
(a) derive a triboelectric charge amount of the liquid droplet at different positions on the insulating film along the arrangement direction from the arrangement positions of the electrodes and their corresponding ground current data, and thereby generate a position-charge quantity response curve as a measured triboelectric chemical spectrum of the liquid droplet;
(b) compare the measured triboelectric chemical spectrum with the standard triboelectric chemical spectra of multiple solution samples stored in a non-transitory storage medium, and calculate multiple corresponding spectrum matching degrees; wherein the multiple solution samples have different chemical compositions, chemical valence states, and/or concentrations; and
(c) identify a solution sample exhibiting a highest spectrum matching degree to the measured triboelectric chemical spectrum, and output chemical composition, ion species, chemical valence state, and concentration information of the liquid droplet based on chemical information of the identified solution sample.

2. The spectrometer of claim 1, wherein each of the electrodes comprises a material selected from the group consisting of copper film, aluminum film, and gold film.

3. The spectrometer of claim 1, wherein the plurality of electrodes is arranged in a linear array configuration, wherein the orientation of the linear array is inclined relative to a horizontal plane.

4. The spectrometer of claim 3, wherein each of the electrodes is **characterized by** a thickness in a range of 0.1 µm to 1 mm, a length in a range of 1 mm to 100 cm, and a width in a range of 1 mm to 10 cm; the width direction of the electrodes is parallel to the direction of the linear array; the plurality of electrodes is arranged in a parallel and equally spaced configuration with a spacing in a range of 1 mm to 100 cm.

5. The spectrometer of claim 3, wherein each of the electrodes has a cross-sectional shape perpendicular to the direction of the linear array, wherein the cross-sectional shape is one of a rectangle, a "V" shape, a "U" shape, and a circular ring.

6. The spectrometer of claim 1, wherein:
the plurality of electrodes is arranged in a circumferential array configuration and fixed to a roller;
the insulating film is disposed on an inner wall of the roller and in contact with the plurality of electrodes; and
the spectrometer further comprises a driving member configured to drive the roller to rotate about its central axis.

7. The spectrometer of claim 1, wherein the insulating film is formed from one of polytetrafluoroethylene, perfluoroethylene propylene copolymer, nylon, and polymethyl methacrylate, and has a thickness in a range of 1 µm to 1 mm.

8. A chemical composition analysis method based on liquid friction adapted for implementation by the spectrometer of any one of claims 1 to 7; the analysis method comprises:
causing a liquid droplet to slide on the insulating film;
collecting ground current data from each electrode;
deriving the triboelectric charge amount of the liquid droplet at different positions on the insulating film along the arrangement direction from the arrangement positions of the electrodes and their corresponding ground current data;
generating a position-charge quantity response curve as a measured triboelectric chemical spectrum of the liquid droplet;
comparing the measured triboelectric chemical spectrum with the standard triboelectric chemical spectra of multiple solution samples in a database;
calculating multiple corresponding spectrum matching degrees; wherein the multiple solution samples have different chemical compositions, chemical valence states, and/or concentrations;
identifying a solution sample exhibiting a highest spectrum matching degree to the measured triboelectric chemical spectrum; and
outputting chemical composition, ion species, chemical valence state, and concentration information of the liquid droplet based on the chemical information of the solution sample.

9. The analysis method of claim 8, wherein the database is preconstructed by a method comprising:
preparing a plurality of solution samples with specific chemical information according to analysis requirements, wherein the plurality of solution samples have different chemical compositions, chemical valence states, and/or concentrations;
conducting multiple liquid droplets triboelectric charging tests on each of the solution samples in accordance;
obtaining multiple sets of triboelectric chemical spectra for each solution sample, generating the multiple sets of triboelectric chemical spectra into a standard triboelectric chemical spectrum for each solution sample;
constructing the database based on the specific chemical information and the standard triboelectric chemical spectra of the plurality of solution samples.

10. The analysis method of claim 9, wherein the comparison items comprise the position, peak height, and peak width of characteristic peaks.
